# EUROPEAN PATENT SPECIFICATION

(11) **EP 3 461 617 B1**
(45) Date of publication and mention of the grant of the patent: **19.02.2020**
(21) Application number: 17193374.0
(22) Date of filing: 27.09.2017
(51) Int. Cl.: B29C 64/106, B29C 64/165, B29C 64/194, B29C 64/314, B29C 64/209, B33Y 10/00, B33Y 30/00, B33Y 99/00, B29K 105/00

(54) **METHOD AND APPARATUS FOR PRINTING COLORED THREE DIMENSIONAL OBJECTS**
VERFAHREN UND VORRICHTUNG ZUM DRUCKEN FARBIGER DREIDIMENSIONALER OBJEKTE
PROCÉDÉ ET APPAREIL D'IMPRESSION D'OBJETS COLORÉS TRIDIMENSIONNELS

(43) Date of publication of application: 03.04.2019
(73) Proprietor: Bayerische Motoren Werke Aktiengesellschaft, 80809 München (DE)
(72) Inventor: Kennedy, Ken, Greenville, SC 29607 (US); Luckow, Andre, 29607 Greenville, SC (US); Vorster, Bennie, Simpsonville, SC 29681 (US)

(56) References cited:
- EP-A1- 3 061 865
- US-A1- 2014 134 334
- US-A1- 2016 243 764

## Description

The invention relates to a method and an apparatus for printing colored three dimensional objects according to claims 1 and 6.

Three dimensional (3D) printing has been a major technology in the field of scientific research for the manufacturing of prototypes and models. However, with the progress in the computer aided manufacturing technology (CAM), three dimensional (3D) printers have become more and more widely available and are preferred for both commercial and industrial use. In this case, the addition of color has become a relevant component to the 3D printing. Moreover both the demand for high quality production and a lower production time and cost, has posed a challenge to the scientific and engineering community. Hence, innovations and modifications to the existing 3D printing techniques are of relevance.

One of the 3D printing process for printing colored objects involves, a layer-wise additive manufacturing (AM) process that deposits fluids or other material onto a powder-based build material. In this process, a layer of powder-based build material is added on a forming surface, onto which fluids are deposited or applied according to required cross-sectional shape and color of the workpiece in the X-Y plane through scanning. These fluids could be ink, toner, binding fluids, colorants and/or other materials used in a printing process. These fluids can bind the powder-based build material through chemical reactions or application of selective heat or laser or in case of ultra violet (UV) ink-jet process, through a UV source. Once the powder-based build material is hardened as a printed layer, then the steps are repeated layer-by-layer, ultimately to form the 3D object.

In WO 2015/073301 one or more cartridges each with a building material stored therein, a mixer coupled to each cartridge and a single print head coupled to a mixture output is used. Here the building material stored in the cartridge is transported to the mixer and the single print head to form a continuous color object. The materials however, need to be in a sealed liquid state.

Among various three dimensional printing methods, one of the widely used method is the fused deposition modeling (FDM). In this method, forming materials are turned into wires and then are heated to a molten state. This molted forming material is then extruded by means of a nozzle on a forming surface, so as to stack the material layer by layer according to the geometric information of a 3D object. This method was first described in the U.S. Pat. No. 5121329. Various other processes analogous to FDM are available in today, such as, the fused filament fabrication (FFF), melted extrusion manufacturing (MEM) or selective deposition modeling (SDM). Modifications to the FDM method have been made, in order to incorporate the color component.

The U.S. Pat. No. 2017/0190115 describes an apparatus and method for a direct dyeing type color fused deposition modeling three-dimensional printing. The apparatus includes a forming stage, a forming unit, and a color-inkjet unit. The forming unit is located above the forming stage for providing forming-material layers on the forming stage in sequence. The color-inkjet unit is located above the forming stage for providing color-ink layers on the forming-material layers in sequence, wherein the forming-material layers and the color-ink layers are stacked alternately in sequence to form a colored 3D object.

In US 2016/0243764 A1 a method of fabricating an object is disclosed, comprising depositing a first layer of first object material on a support substrate electrode; applying a conductive agent material onto the first layer; depositing a first layer of charged powder on an intermediate substrate; conveying the first layer of charged powder on the intermediate substrate proximate to the first layer of first object material; and applying a transferring electric field to cause transfer of the first layer of charged powder from the intermediate substrate onto the first layer on the support substrate electrode, to form a first powder layer on the first layer on the support substrate electrode. Multiple powder layers may be deposited on the first layer.

In US 2014/134334 A1 a 3D extrusion print process for producing multicolored three-dimensional objects is provided. The process produces mechanically stable, multicolored 3D objects with good color definition. The process according to the invention is based on coating, upstream of the printing head, of the polymer strand used for producing the actual object, and on fixing of the coating upstream of entry of the polymer strand into the printing head. Downstream of the extrusion process in the printing head, the coating remains predominantly at the surface of the extruded strand.

Further modifications to the FDM method have been made, in order to involve multiple coloring of the 3D printed object. These modifications to the FDM method include the use of multiple filaments or filament spools, each of which are pre colored. At different points in the build process, the printing is interrupted so that the filament color can be changed, in case a new color is required. Some printers handle this process by having multiple print heads but this limits the number of colors to the number of print heads and filament spools.

It is an object of the present invention to provide a method and an apparatus for printing of colored three dimensional objects for improving the efficiency of the manufacturing process of the colored 3D object.

This object is solved by a method having the features of patent claim 1 as well as a printing apparatus having the features of patent claim 6. Advantageous embodiments with expedient developments of the invention are indicated in the dependent claims.

The described method and apparatus according to the present invention is applicable with fused deposition modeling which can also be called fused filament fabrication. According to the present disclosure, the presented method for printing at least one colored three dimensional object by means of a printing apparatus, comprises of the following steps: Acquiring information regarding geometry and color of the object to be printed from a 3D digital model. The 3D digital model can be in form of a digital file format used in a computer aided design (CAD) software.

Based on the received information, a transportation unit conducts the step of transporting a material to be used for the printing of at least one colored three dimensional object on a forming surface.

In the method the material can be laid down on the forming surface, in layers in order to create the three dimensional object in a direction locally orthogonal to the forming surface. This is of advantage, since this enables 3D printing of a broad varieties of objects along with certain special types of objects, for example, objects where hollowed structures or structures filled with a different material of an object of different material, in order to increase the buckling strength of the object, for example helmets. Such special types of objects can be manufactured using the present layer by layer 3D printing method as compared to other manufacturing methods such as injection molding.

According to the invention the three dimensional printing is conducted as fused deposition modeling (FDM). This is of advantage, since this enables the printing of colored 3D objects in addition to the advantages related to FDM as such. FDM is one of the most commonly used 3D printing method using materials such as thermoplastics. One of the major advantages of FDM being, that it can produce anything that can be designed on a CAD application with a good accuracy. Moreover, it is easy to use, since all the steps in this method can be computer controlled. FDM can be also referred to as fused filament fabrication (FFF) method. In other words, the 3D printing can be conducted as FFF.

In an advantageous embodiment the polarities of the charges on the material and the coloring unit are reversible. This is of advantage, since this enables to use any type of charging means without any restriction of the charging means to be of a certain polarity. During the transportation of the material, which can be in form of a filament, the material and the coloring unit can be electrostatically charged with opposite polarities. The material can be charged, for example by means of material corona wire or other material charging means. Whereas the coloring unit which can comprise of a photo-sensitive drum, can be charged via a drum corona wire, wherein the charging of the coloring unit can be opposite to that of the charge of the material.

The coloring unit can further include a singular or a plurality of color toners for the application of color to the coloring unit according to the acquired information. The toners can apply color in the form of ink which can get attracted to a photoconductive surface of the photo-sensitive drum, which can be electrostatically charged, in other words by charge possessed by the photo-sensitive drum, which in turn can be a part of the coloring unit.

In a further advantageous embodiment, the color is applied to the coloring unit in the form of electrostatically charged powdered ink. This is of advantage, since by using powdered ink, the effort for sealing the apparatus is lower as compared to for example liquid ink. As the transporting material passes the photo-sensitive drum, transmission of the color to the material from the coloring unit occurs due to the opposite polarities. The color is applied to the coloring unit in the form of electrostatically charged powdered ink. The material is then mixed with color. The mixing of the material with the color, which is transmitted to the material by means of electrostatic charge difference, can be performed by heating the material in order to fuse the color with the material. This is of advantage with respect to the prior art since, this enables to improve the coloring quality, achieve variability of the coloring and be applicable for a wide variety of materials and other 3D printing techniques or devices.

According to the disclosure, as the printing material, plastic, metal and/or ceramic is used. The printing material used for the 3D printing can be plastic, metal, ceramic, or any other substance that will permit fusing with electrostatically charged ink. Further the material can be in the form of a filament or build-material-powder or liquid or semi solid or any other form which can solidify.

After the mixing of the material with color, the printing of the three dimensional object from the material in form of material layers on the forming surface according to the acquired information is performed. In other words the printing of the material is performed in a layer-by-layer manner on the forming surface in order to create the three dimensional object in a direction locally orthogonal or normal to the forming surface.

In a further advantageous embodiment, the material is heated in order to fuse the color with the material. This is of advantage, since this enables a much improved mixing of the color with the material, thus improving the coloring quality of the 3D printed object.

Another aspect of the invention relates to a fused deposition modeling apparatus according to claim 6 for printing at least one colored three dimensional object. The printing apparatus comprises a processing unit, which is designed to acquire information regarding geometry and color of the object to be printed from a 3D digital model, a transporting unit, which is designed to transport a material to be used for the printing of the at least one colored three dimensional object on a forming surface, a printing unit, which is designed to print the three dimensional object from the material in form of material layers on the forming surface according to the acquired information.

According to the invention, the printing apparatus further comprises a coloring unit, means for electrostatically charging the material and a coloring unit of the printing apparatus with opposite polarities, means for the application of color to the coloring unit according to the acquired information, means for transmission of the color to the material from the coloring unit due to the opposite polarities and means for mixing the material with the color.

The proposed method and apparatus allows colored 3D printing without the need to use multiple colored filaments, which limit the range and quality of the coloring of the printed 3D colored object. A further advantage of the current disclosure can be that, it can allow 3D printing of the colored object without any interruption, in order to change the colored filaments or cartridges. Since, in this case, the coloring can be done in a continuous manner, where the required color can be transmitted on the material by means of electrostatic charge difference and mixing of the material with the color can be performed on a later stage before printing. As a result, this approach can allow a wide range of colors to be incorporated into the setup without need of multiple filaments or print heads. Further due to the thorough mixing of the material and color before printing, certain sharp unwanted color transitions due to improper mixing can be avoided and a desired color variation can be achieved leading to a high quality of the colored 3D print.

The drawings show in:
- Fig. 1: a flow diagram illustrating steps of a method, by means of which method, the printing of at least one colored 3D object can be operated; and
- Fig. 2: a schematic and perspective view of an embodiment of the printing apparatus for printing at least one colored 3D object.

In the figures the same elements or elements having the same functions are indicated by the same reference signs.

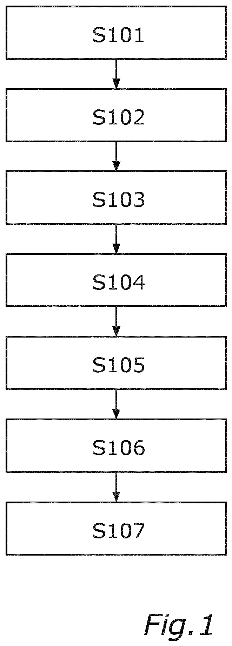

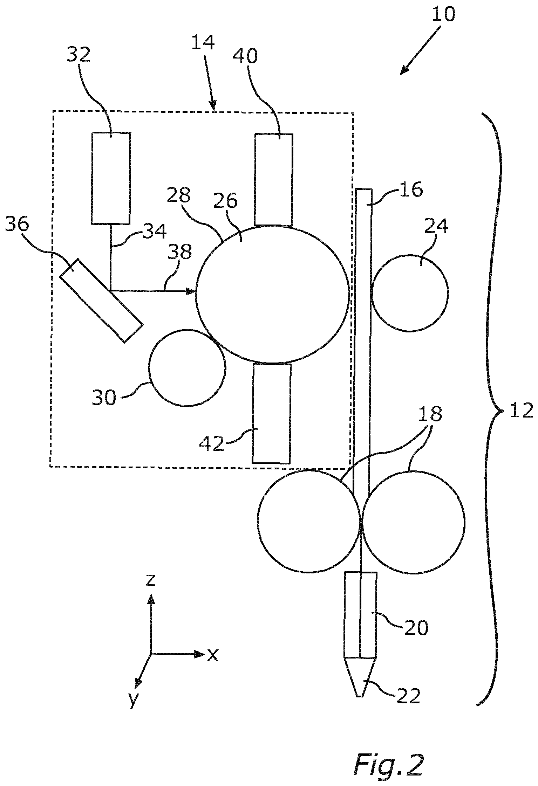

Fig. 1 shows a flow diagram illustrating a method for printing at least one colored 3D object according to an embodiment of the present disclosure. The object can be made of materials 16 (shown in Fig. 2) such as plastics, metal, ceramic, or any other substance that can permit fusing with electrostatically charged ink. Materials 16 can be in fluid or semi solid state that can be solidified. The process of solidification may involve heating or cooling or drying or any such procedures. Further application of additives or supplement materials, in order to alter texture or hardness or other physical or chemical properties of the printing material can be considered. Further materials 16 can possess their own individual color, which on mixing with the electrostatically charged ink can change to another color, are also acceptable. Nevertheless, it should be noted that the disclosure is not intended to be limited to the aforementioned materials 16, a combination of the aforementioned materials 16 can be also possible.

According to the disclosure a fused deposition modeling (FDM) method (Fig. 2) for 3D printing will be used, since FDM is one of the most common methods used for 3D printing.

A first step S101 of the method for printing the colored 3D object involves acquiring information regarding geometry and color of the object to be printed from a 3D digital model. The acquisition of the information regarding the geometry and color of the object can be done by means of a processing unit (not shown). The 3D digital models can be loaded in the form of a digital file such as IGES or IGS (Initial Graphics Exchange Specification), STL (Stereolithography or Standard Tessellation Language), STEP (Standard for the Exchange of Product model data), CT images, or other forms of digital files. The 3D digital model is provided by the user to the 3D printing device 10 by means of a user interface. The user interface can be in the form of a software interface on a computer or smartphone or tablet or any such device that can communicate with the 3D printing apparatus 10. Alternatively a built in interface to load data on portable storage devices such as CDs or DVDs or SD drives or flash drives or similar devices can be used to communicate with the 3D printing apparatus 10.

Upon receiving the user input data from the processing unit, the data can be used by a transporting unit 16, which can be an electrical or electronic system, for transporting the material 16 to be used for the printing of the colored 3D object on a forming surface (not shown), which is done in a second step S102. The transported material 16 can be in form of a filament or build-material-powder, or semi-fluid-build-material or other material-forms used in various 3D printing methods.

In a third step S103, both the material 16, during its transporting phase, and a coloring unit 14 (shown in Fig. 2) are electrostatically charged with opposite polarities respectively. The polarities of the charges on the material 16 and the coloring unit 14 are reversible.

The coloring unit comprises a drum, which can be a photo-sensitive drum 26 (shown in Fig. 2), comprising a photoconductive surface 28. The photo-sensitive drum 26 is charged via a charging element, for example a drum corona wire 30 (shown in Fig. 2). The coloring unit 14 further comprises a system of singular or plural toners 40 (shown in Fig. 2) or cartridge which apply ink to the photoconductive surface 28 of the photo-sensitive drum 26 according to the acquired information from the digital 3D model. The application of color to the coloring unit 14 according to the acquired information, is accomplished in a fourth step S104. Further, the ink can be in the form of a powder or a semi solid or a liquid or any other relevant form, the ink can comprise a colorant or a plurality of colorants. The system of toners 40 can be a four-toner system or a three toner system or a system of different number of toners. The system of singular or plural toners 40 can apply color to the coloring unit 14 according to the acquired information.

The amount of different colors that can be applied to the coloring unit 14 can depend upon the acquired information, and the ratios of the amounts of the different applied colors, can determine the color of the final color output that can be later transmitted to the material 16. This transmission of the color to the material 16 is described in a fifth step S105 later. The ratios of the amounts of different colors can also depend on the original color of the material 16 itself, which could add to the final color of the material and color mixture, the mixing of the color with the material 16 will be described in a sixth step S106 later.

In the fifth step S105 of the method, the transmission of the color to the material 16 from the coloring unit 14 due to the opposite polarities occurs. This can be explained in the following manner, during the transporting process, as the material 16 passes the photo-sensitive drum 26, then the electrostatically charged color on the photoconductive surface 28 is attracted to the charged material 16 due their opposite polarities. Further, the amount of color that can be transmitted from the coloring unit 14 to the passing material 16 can be controlled by the magnitude of the charge on both the material 16 and the coloring unit 14, discussed in the fourth step S104.

In addition the amount of color that can be transmitted to the material 16 from the coloring unit 14 can also depend on the transportation rate of the material 16, which can be dependent on the acquired information mentioned in step S101. Nevertheless, the dependency of the transmission of the color from the coloring unit 14 to the material 16 due to the opposite polarities, is not limited to factors such as, relative application rates of different colors to the coloring unit 14 or the color of the material 16 or the transportation rate of the material 16 or the magnitude of the charge on the material 16 and the coloring unit 14 or other similar factors. A combination of the aforementioned factors which may be adjusted as required, is also possible.

In the sixth step S106 of the method, the mixing of the material 16 with the color is performed. The mixing of the material 16 with the color can be made by the application of heat, due to which the color can be fused with the material 16. The heat can be generated by means of an electric heater or by microwaves or by magnetic fields or by electric fields or by a singular laser or a plurality of lasers or by other physical or chemical means. Further the material 16 may also include additives or adhesion promoters or similar materials, which can be activated on the application of heat energy and hence enable the mixing of the material 16 with the color. The material 16 can be further mixed with the color by means of physical or chemical means, which a person skilled in the art can decide according to the choice of the combination of the material 16 and the color.

A seventh step S107 of the method includes, the printing of the 3D object from the material 16 in form of material layers on the forming surface according to the acquired information. The material 16 is laid down on the forming surface, in layers in order to create the three dimensional object in a direction locally orthogonal to the forming surface. The printing of the material 16 that can be mixed with the color, as explained in step S106, can be performed by means of a singular extruder or a multitude of extruders or other means, by which the material 16 can be laid on the forming surface. The discharge of the material 16 can be further performed on the dependency of the acquired information. Further the discharge of the material 16 can be in the form of a continuous solid or semi solid or fluid state or in the form of droplets or in the form of a powdered material. Any other possible material discharge forms or material forms, in which the material gets laid on the forming surface, can also be possible with regard to the present invention.

Further the forming surface can be a two dimensional (2D) plane or a curved surface. For example, the forming surface can be a 2D X-Y plane, on which the material is discharged to be laid layer-by-layer to print the three dimensional object in the Z direction. Upon the formation of the layer of the material 16 on the forming surface, the material 16 can be solidified by itself spontaneously or after a time interval or by means of an external heat source or by means of cooling or by means of drying or by means electromagnetic waves or by the addition of additives or by other possible physical or chemical means.

Fig. 2 illustrates a printing apparatus 10 for printing the colored 3D object. In order to describe the method and the apparatus, the fused deposition modeling (FDM) for 3D printing is used. In the Fig. 2, the printing apparatus 10 is shown. This printing apparatus 10 includes a processing unit (not shown in figure), which is designed to acquire information regarding geometry and color of the object, a forming unit 12, the coloring unit 14 and a forming stage (not shown in figure).

The acquired information by the processing unit, can be sent to the forming unit 12. The forming unit 12 comprises of a forming material 16, which can be in the form of a filament. For the sake of understandability, the terms material and filament can be regarded as the same in the description. The material 16 that can be typically used in FDM, in order to print a 3D object, can be thermoplastics such as Acrylonitrile butadiene styrene (ABS) or Polylactide (PLA) plastic or similar materials.

The material 16 is transported by means of the transporting unit 18, the transporting unit 18 can be gear- or roller based supplying torque to the material 16 and can be controlling the feed rate of the material 16 by means of a device, for example a stepper motor. The transporting unit 18 can transport the material 16 to be used for the printing of a three dimensional object on a forming surface, according to the information acquired by the processing unit.

The material is heated in a liquefier 22 to a molten state and then can be extruded or discharged form a nozzle 24 on to the forming surface, on which material 16 is laid down layer wise (layer-by-layer) to form the 3D object. In other words, the material 16 can be laid down on the forming surface, for example an X-Y plane one layer at a time in order to create the model in the Z dimension (direction).

In order to print the colored 3D object according to the aforementioned method by means of the apparatus 10, the forming unit 12 comprises a singular or a plurality of electrostatically material charging means, which in this case can be at least one material corona wire 24 (transfer corona wire). The material corona wire 24 can charge the material 16, while the material 16 is being transported to liquefier 22, with an electric charge, for example a positive charge. This means, that the material 16 can contain the positive charge after passing by the material corona wire 24. The charging of the material 16 can be done by touching the material corona wire 24 or by passing at a certain distance to the material corona wire 24 or other similar charging means.

The coloring unit 14 comprises at least one drum, which can be a photo-sensitive drum 26. The photo-sensitive drum 26 comprises a photoconductive surface 28. The photo-sensitive drum 26 is charged with a negative electric charge that is applied via a charging device, for example a drum corona wire 30 (primary corona wire).

A laser device 32 emits a beam of light 34 onto a mirror 36, the mirror 36 at least partially reflects the beam of light 34, the reflected beam of light 38 which is directed towards the photoconductive surface 28 of the strong negatively charged photo-sensitive drum 26. The reflected beam of light 38 can have the same intensity and frequency as the emitted beam of light 34 by the laser device, in which case the beams of light 34 and 38 are the same.

The reflected beam of light 38 is incident on the photoconductive surface 28 of the photo-sensitive drum 26, which is charged with the strong negative charge. This creates a latent image on the photoconductive surface 28.

The coloring unit 14 comprises a singular or a plurality of toners 40, which apply ink to color the photo-sensitive drum 26 of the coloring unit 14. The applied ink is transferred or attracted on the region of the photoconductive surface 28, on which the latent image has been created by the reflected beam of light 38 that is incident on the photoconductive surface 28. As a result, the attracted ink can be stored on the latent image region of the photoconductive surface 28, in other words the latent image can be transformed to a toner image. The ink can be in the form of a powdered ink.

As the material 16 passes by the photo-sensitive drum 26, the ink is transmitted from the photoconductive surface 28 of the strong negatively charged photo-sensitive drum 26 on to the surface of the material 16, which is strong positively charged. In other word, the color is transmitted to the material 16 from the coloring unit 14 due to the opposite polarities. However, the polarities of the charges on the material 16 and the coloring unit 14 are reversible.

The coloring unit 14, further comprises an erasing lamp 42, which can be designed to erase charges remaining on the photoconductive surface 28 of the photo-sensitive drum 26 prior to charging. The erasing lamp 42, can be further designed to remove charges from a non-image region of the photoconductive surface 28 of the photosensitive drum 26 before the toner image is formed on the photoconductive surface 28 and is transferred to the material 16. As a result, the erasing lamp 42 improves the transmission efficiency of the color from the coloring unit 14 to the material 16.

The varieties of different colors to be applied to the coloring unit 14 as well as the amount of color transmitted to the material 16, can be chosen according to acquired information by the processing unit.

As the material 16 acquires color from the coloring unit 14, the material 16 is transported towards the liquefier 20. Here the material 16 and the color are heated in order to fuse the color with the material 16. The heating of the material 16 and color can be up to the melting point of the material 16 and the color. Hence, the mixing of the material 16 with the color is achieved.

After the mixing, the melted material 16 is extruded onto the forming surface or on the other material 16 used within the 3D printing method. In other words, the material 16 is extruded on to the forming surface layer-by-layer, leading to the printing of the colored 3D object.

### List of reference numbers

- 10: fused deposition modeling apparatus
- 12: forming unit
- 14: coloring unit
- 16: material
- 18: transporting unit
- 20: liquefier
- 22: nozzle
- 24: material corona wire
- 26: photo-sensitive drum
- 28: photoconductive surface
- 30: drum corona wire
- 32: laser device
- 34: emitted beam of light
- 36: mirror
- 38: reflected beam of light
- 40: toner
- 42: erasing lamp

## Claims

1. Method for printing at least one colored three dimensional (3D) object by means of a fused deposition modeling apparatus (10), the method comprising:
- acquiring information regarding geometry and color of the object to be printed from a 3D digital model;
- transporting a material (16) to be used for the printing of the at least one colored three dimensional object on a forming surface;
- printing the three dimensional object from the material (16) in form of material layers on the forming surface according to the acquired information;
**characterized in that**, prior to printing the three dimensional object, the following steps are being performed:
- electrostatically charging the material (16) and a coloring unit (14) of the printing apparatus with opposite polarities;
- application of color to the coloring unit (14) according to the acquired information;
- transmission of the color to the material (16) from the coloring unit (14) due to the opposite polarities;
- mixing the material (16) with the color.

2. Method according to claim 1,
**characterized in that**,
the polarities of the charges on the material (16) and the coloring unit (14) are reversible.

3. Method according to claim 1 or 2,
**characterized in that**,
the color is applied to the coloring unit (14) in the form of electrostatically charged powdered ink.

4. Method according to any one of claims 1 to 3,
**characterized in that**,
as the printing material (16), plastic, metal and/or ceramic is used.

5. Method according to any one of claims 1 to 4,
**characterized in that**,
the material (16) is heated in order to fuse the color with the material (16).

6. Fused deposition modeling apparatus (10) for printing at least one colored three dimensional object, the fused deposition modeling apparatus comprising:
- a processing unit, which is designed to acquire information regarding geometry and color of the object to be printed from a 3D digital model;
- a transporting unit (18), which is designed to transport a material (16) to be used for the printing of the at least one colored three dimensional object on a forming surface;
- a printing unit, which is designed to print the three dimensional object from the material (16) in form of material layers on the forming surface according to the acquired information;
the fused deposition modeling apparatus (10) comprising means for
- electrostatically charging the material (16) and a coloring unit (14) of the fused deposition modeling apparatus with opposite polarities;
- application of color to the coloring unit (14) according to the acquired information;
- transmission of the color to the material (16) from the coloring unit (14) due to the opposite polarities;
mixing the material (16) with the color.

## Patentansprüche

1. Verfahren zum Drucken mindestens eines gefärbten dreidimensionalen Gegenstands (3D-Gegenstand) mittels einer Schmelzabscheidungsmodelliervorrichtung (10), wobei das Verfahren Folgendes umfasst:
- Erfassen von Informationen hinsichtlich der Geometrie und der Farbe des Gegenstands, der gedruckt werden soll, aus einem digitalen 3D-Modell;
- Transportieren eines Materials (16), das zum Drucken des mindestens einen gefärbten dreidimensionalen Gegenstands verwendet werden soll, auf eine Formungsfläche und
- Drucken des dreidimensionalen Gegenstands aus dem Material (16) in Form von Materialschichten auf der Formungsfläche gemäß den erfassten Informationen;
**dadurch gekennzeichnet, dass** vor dem Drucken des dreidimensionalen Gegenstands die folgenden Schritte durchgeführt werden:
- elektrostatisches Laden des Materials (16) und einer Farbgebungseinheit (14) der Druckvorrichtung mit entgegengesetzten Polaritäten;
- Auftragen von Farbe auf die Farbgebungseinheit (14) gemäß den erfassten Informationen;
- Übertragen der Farbe zum Material (16) von der Farbgebungseinheit (14) aufgrund der entgegengesetzten Polaritäten und
- Mischen des Materials (16) mit der Farbe.

2. Verfahren nach Anspruch 1, **dadurch gekennzeichnet, dass**
die Polaritäten der Ladungen auf dem Material (16) und der Farbgebungseinheit (14) umkehrbar sind.

3. Verfahren nach Anspruch 1 oder 2, **dadurch gekennzeichnet, dass**
die Farbe in Form einer elektrostatisch geladenen pulverförmigen Tinte auf die Farbgebungseinheit (14) aufgebracht wird.

4. Verfahren nach einem der Ansprüche 1 bis 3, **dadurch gekennzeichnet, dass**
Plastik, Metall und/oder Keramik als das Druckmaterial (16) verwendet werden.

5. Verfahren nach einem der Ansprüche 1 bis 4, **dadurch gekennzeichnet, dass**
das Material (16) erhitzt wird, um die Farbe mit dem Material (16) zu verschmelzen.

6. Schmelzabscheidungsmodelliervorrichtung (10) zum Drucken mindestens eines gefärbten dreidimensionalen Gegenstands, wobei die Schmelzabscheidungsmodelliervorrichtung Folgendes umfasst:
- eine Verarbeitungseinheit, die ausgelegt ist, Informationen hinsichtlich der Geometrie und der Farbe des Gegenstands, der gedruckt werden soll, aus einem digitalen 3D-Modell zu erfassen;
- eine Transporteinheit (18), die ausgelegt ist, ein Material (16), das zum Drucken des mindestens einen gefärbten dreidimensionalen Gegenstands verwendet werden soll, auf eine Formungsfläche zu transportieren; und
- eine Druckeinheit, die ausgelegt ist, den dreidimensionalen Gegenstand aus dem Material (16) in Form von Materialschichten auf der Formungsfläche gemäß den erfassten Informationen zu drucken; wobei
die Schmelzabscheidungsmodelliervorrichtung (10) Mittel umfasst zum
- elektrostatischen Laden des Materials (16) und einer Farbgebungseinheit (14) der Schmelzabscheidungsmodelliervorrichtung mit entgegengesetzten Polaritäten;
- Auftragen von Farbe auf die Farbgebungseinheit (14) gemäß den erfassten Informationen;
- Übertragen der Farbe zum Material (16) von der Farbgebungseinheit (14) aufgrund der entgegengesetzten Polaritäten und
- Mischen des Materials (16) mit der Farbe.

## Revendications

1. Procédé d'impression d'au moins un objet tridimensionnel coloré (3D) au moyen d'un appareil de modelage par dépôt fondu (10), ce procédé comprenant des étapes consistant à :
- obtenir une information concernant la géométrie et la couleur de l'objet à imprimer à partir d'un modèle numérique 3D,
- transférer un matériau (16) destiné à être utilisé pour l'impression de l'objet tridimensionnel coloré sur une surface de formage,
- imprimer l'objet tridimensionnel à partir du matériau (16) sous la forme de couches de matériau sur la surface de formage conformément à l'information obtenue,
**caractérisé en ce que**
avant l'impression de l'objet tridimensionnel, on met en œuvre les étapes suivantes consistant à :
- charger électro-statiquement le matériau (16) et une unité de coloration (14) de l'appareil d'impression avec des polarités opposées,
- appliquer une couleur à l'unité de coloration (14) conformément à l'information obtenue,
- transférer la couleur au matériau (16) à partir de l'unité de coloration (14) du fait des polarités opposées,
- mélanger le matériau (16) avec la couleur.

2. Procédé conforme à la revendication 1,
**caractérisé en ce que**
les polarités des charges du matériau (16) et de l'unité de coloration (14) sont réversibles.

3. Procédé conforme à la revendication 1 ou 2,
**caractérisé en ce que**
la couleur est appliquée à l'unité de coloration (14) sous la forme d'une encre pulvérulente chargée électro-statiquement.

4. Procédé conforme à l'une quelconque des revendications 1 à 3,
**caractérisé en ce que**
en tant que matériau d'impression (16) on utilise une matière plastique, un métal et/ou une céramique.

5. Procédé conforme à l'une quelconque des revendications 1 à 4,
**caractérisé en ce que**
le matériau (16) est chauffé de façon à fondre la couleur avec ce matériau (16).

6. Appareil de modelage par dépôt fondu (10) permettant d'imprimer au moins un objet tridimensionnel coloré, cet appareil de modelage par dépôt fondu comprenant :
- une unité de traitement qui est conçue pour obtenir une information concernant la géométrie et la couleur de l'objet à imprimer à partir d'un modèle numérique 3D,
- une unité de transfert (18) qui est conçue pour transférer un matériau (16) destiné à être utilisé pour l'impression de l'objet tridimensionnel coloré sur une surface de formage,
- une unité d'impression qui est conçue pour imprimer l'objet tridimensionnel à partir du matériau (16) sous la forme de couches de matériau sur la surface de formage conformément à l'information obtenue,
- l'appareil de modelage par dépôt fondu (10) comprenant des moyens permettant de charger électro-statiquement le matériau (16) et une unité de coloration (14) de l'appareil de modelage par dépôt fondu avec des polarités opposées,
- appliquer la couleur à l'unité de coloration (14) conformément à l'information obtenue,
- transmettre la couleur au matériau (16) à partir de l'unité de coloration (14) du fait des polarités opposées,
- mélanger le matériau (16) avec la couleur.
